# EUROPÄISCHE PATENTSCHRIFT

(11) **EP 2 013 386 B1**
(45) Veröffentlichungstag und Bekanntmachung des Hinweises auf die Patenterteilung: **11.11.2009**
(21) Anmeldenummer: 07722272.7
(22) Anmeldetag: 21.04.2007
(51) Int. Cl.: D01F 13/02

(54) **VERFAHREN ZUR ABTRENNUNG VON SUPERABSORBERPARTIKELN AUS AMINOXIDHALTIGEN SPINNBÄDERN**
METHOD FOR THE ELIMINATION OF SUPERABSORBER PARTICLES FROM AMINE OXIDE-CONTAINING SPINNING BATHS
PROCÉDÉ DE SÉPARATION DE PARTICULES SUPERABSORBANTES DE BAINS DE FILAGE CONTENANT DE L'AMINE-OXYDE

(30) Priorität: 24.04.2006 DE 102006019334
(43) Veröffentlichungstag der Anmeldung: 14.01.2009
(73) Patentinhaber: THÜRINGISCHES INSTITUT FÜR TEXTIL- UND KUNSTSTOFF-FORSCHUNG e.V., 07407 Rudolstadt (DE)
(72) Erfinder: BÜTTNER, Reiner, 07407 Rudolstadt (DE); KOLBE, Axel, 07924 Neuendorf bei Schleiz (DE); MARKWITZ, Hardy, 07407 Rudolstadt (DE); KOHNE, Michael, 79194 Gundelfingen (DE)
(74) Vertreter: Plate, Jürgen
(86) Internationale Anmeldenummer: PCT/DE2007/000714
(87) Internationale Veröffentlichungsnummer: WO 2007/121728

(56) Entgegenhaltungen:
- EP-A1- 0 488 988
- WO-A-93/11287
- WO-A-97/07268
- WO-A-03/012182
- AT-B- 401 184
- US-A- 5 731 083

## Beschreibung

Die Erfindung betrifft ein Verfahren zur Abtrennung von Superabsorberpartikeln aus aminoxidhaltigen Spinnbädern.

Die Abtrennung von Superabsorberpartikel, die als feinverteilte Hydrogelpartikel vorliegen, aus Spinnbädern mit mindestens 2 % eines Aminoxids, bespielsweise N-Methylmorpholin-N-oxid (NMMO), wie sie z.B. bei der Herstellung von cellulosischen Formkörpern mit inkorporierten vernetzten Polyacrylmethacrylaten oder anderen Superabsorbern nach dem Trocken-Nass-Extrusionsverfahren anfallen, ist notwendig. Sie reagieren als Polyanionen und stören das Lösungsmittelrecycling. Erst dadurch wird das Verfahren zur Celluloseverformung mit NMMO wirtschaftlich. Die Partikel lassen sich bei der Spinnbadaufbereitung mit mechanischen Mitteln jedoch nicht quantitativ abtrennen.

Es ist bekannt, Superabsorberpartikel (SAP) als Flockungsmittel zu verwenden, um mehrwertige Metallionen aus Prozess- oder Abwässern abzutrennen (Ullmann's Encyclopedia of Industrial Chemistry (5. Aufl.), VCH 1992, Volume A 21, S. 143). Weiterhin ist bekannt, dass SAP aus SAP-haltigem Wasser durch die Zugabe von bivalenten Metallkationen ausgeflockt und abgetrennt werden kann (JP 2000-246011 A).

In der US 5,731,083 A sind Fasern aus Carboxymethylcellulose offenbart, wobei der durchschnittliche Substitutionsgrad (DS) der Cellulose mit Carboxymethylgruppen mindestens 0,1, bevorzugt 0,2 bis 0,5, pro Anhydroglucose-Einheit beträgt. Fasern mit einem relativ hohen DS (Carboxymethyl) sind in Wasser quellbar und wirken als Superabsorber. Bei einem DS (Carboxymethyl) von mehr als 0,5 sind die Fasern dagegen wasserlöslich. Hergestellt werden die CMC-Fasem aus Cellulosefasern, die vorzugsweise nach dem NMMO-Verfahren erhalten wurden. Diese werden mit Alkali und Monochloressigsäure umgesetzt. Erfolgt die Umsetzung der Cellulosefasern in Gegenwart von mehrwertigen Kationen, insbesondere von Calcium-, Barium-, Magnesium- oder Zinkionen, dann werden CMC-Fasern mit verminderter Löslichkeit in reinem Wasser erhalten.

Gegenstand der DE 102 10 124 A1 sind Gemische aus hydrogel-formenden Polymeren, die durch Polymerisation von olefinisch ungesättigten Carbonsäuren oder deren Derivaten hergestellt wurden, und Copolymeren aus (C₂-C₈)Olefinen oder Styrolen mit Anhydriden. Die Oberfläche der Partikel aus den hydrogel-formenden Polymere ist vorzugsweise nachvernetzt. Als Nachvernetzungsmittel sind unteranderem Di- und Polyglycidylverbindungen, Alkoxysilylverbindungen, Polyamine, Polyole und Di- und Poly-N-methylol-Verbindungen genannt. Die Hydrophilie der Oberfläche dieser Partikel kann durch Aufsprühen von Lösungen zwei- oder mehrwertiger Metallionen modifiziert werden. Die Metall-Kationen reagieren dabei mit den Säuregruppen des Polymers unter Ausbildung von Komplexen.

Bei der Herstellung von superabsorberhaltigen Cellulosefasern nach dem NMMO-Verfahren werden sehr fein gemahlene Superabsorberpartikel mit einer Korngröße von nicht mehr als 10 µm eingesetzt. Diese sehr kleinen Partikel sind nicht mehr gleichmäßig vernetzt und neigen besonders stark zur Quellung. Durch rein mechanische Verfahren lassen sich diese Partikel nicht oder zumindest nicht vollständig entfernen.

Bei der Rückgewinnung des NMMO's werden Kationen- und Anionen-Austauschersäulen eingesetzt. Die Superabsorberpartikel stellen dabei polymere Anionen dar, die die Anionenaustauschersäule in kurzer Zeit verkleben. Nur nach einer praktisch vollständigen Entfernung der SAP's kann das NMMO daher ökonomisch sinnvoll zurückgewonnen werden.

Es bestand daher die Aufgabe, technologisch die Wiederaufbereitung des als Lösungsmittel für die Cellulose verwendeten NMMO's aus Spinnbädern aus der Herstellung von SAP-Fasern, wie beispielsweise in DE 199 17 614 A1 oder DE 101 37 171 A1 beschrieben, sicherzustellen. Superabsorberpartikel, die für die Herstellung von SAP-Fasern verwendet werden, umfassen vernetzte Polymere oder Copolymere, wie Polyacrylsäuren, Polymethacrylsäuren oder Polyacrylmethacrylate. Durch den Produktionsprozess werden Spinnbäder mit Spuren von SAP versetzt, die in Form von stark gequollenen Hydrogelen vorliegen. Diese Hydrogele sind nicht formstabil und verbleiben als Suspension im Spinnbad. Chemisch können diese Hydrogele als Polyanionen angesehen werden. Sie stören die Abtrennung von Anionen aus Spinnbädern, indem sie mit dem Anionentauscherharz in der Spinnbadrückgewinnung eine technisch irreversible Verbindung eingehen und einzelne Anionentauscherpartikel miteinander verkleben. Die SAP-Anteile des Spinnbades müssen aus diesem Grund quantitativ abgetrennt werden.

Durch die gezielte Zugabe von mehrwertigen Kationen konnte überraschenderweise die Wasseraufnahmekapazität der superabsorbierenden Partikel auch in einem Gemisch aus Wasser, NMMO mit Anteilen von Methylmorpholin, Morpholin, und Chromophoren so stark verringert werden, dass diese sedimentieren und durch eine mechanischen Abtrennung quantitativ aus dem Lösungsmittelrecyclingprozess entfernt werden können.

Überraschenderweise zeigte sich, dass Hydrogele auf SAP-Basis auch in einem Gemisch aus Wasser, hochpolarem Aminoxid und weiteren Abbauprodukten und Verunreinigungen, wie Methylmorpholin, Morpholin oder Chromophore, durch die Zugabe von bi- und polyvalenten Kationen, besonders Metallkationen, so stark in ihrer Schwellkapazität herabgesetzt werden können, dass die Gelform gebrochen und die Partikel in eine sedimentationsfähige Form überführt werden können.

Gegenstand der Erfindung ist demgemäß ein Verfahren zur Abtrennung von Superabsorberpartikeln aus aminoxidhaltigen Spinnbädern, das dadurch gekennzeichnet ist, dass durch die Zugabe von bi- und polyvalenten Kationen in einer Konzentration von 1 bis 25.000 mg/l in das der Wiederaufbereitung zugeführte Spinnbad die Superabsorberpartikel, die in Form von Hydrogelen aus vernetzten Superabsorbern vorliegen, gefällt werden und vom Spinnbad abgetrennt werden können.

Die Abtrennung erfolgt vorzugsweise durch ein mechanisches Verfahren, insbesondere durch Filtrieren oder Zentrifugieren.

Die Superabsorberpartikel bestehen vorzugsweise aus vernetzten Polymeren oder Copolymeren aus bzw. mit Einheiten aus polymerisierbaren ethylenisch ungesättigten Carbonsäuren. Insbesondere bestehen sie aus vernetzten Polyacrylsäuren, Polymethacrylsäuren und/oder Polyacryl(meth)acrylaten. Als Vernetzer können dabei die in der oben genannten DE 102 10 124 A1 beschriebenen Verbindungen eingesetzt werden. Vorzugsweise sind die vernetzten Polymere teilweise neutralisiert, beispielsweise mit NaOH, Natriumcarbonat, Natriumhydrogencarbonat, Ammoniak, primären, sekundären oder tertiären Aminen.

Die bi- oder polyvalente Metallkationen stammen bevorzugt aus Magnesium-, Calcium-, Aluminium- oder Zinksalzen eingesetzt. Als polyvalente Kationen können auch organische Verbindungen, beispielsweise Anionenaustauscherharze, verwendet werden. Die Menge an Kationen, die zugesetzt werden muss, liegt zwischen 1 bis 25.000 mg je Liter Spinnbad und richtet sich nach der SAP-Konzentration im Spinnbad und der Art der verwendeten Kationen. Bei der Zugabe von Ca²⁺-Ionen werden vorzugsweise 100 bis 600 mg je Liter Spinnbad zugesetzt. Der Sedimentationsprozess ist quantitativ. Das Produkt lässt sich mittels mechanischer Verfahren, wie Filtration oder Zentrifugieren abtrennen. Beide Prozesse, Fällung und mechanische Abtrennung des SAP, sind notwendig, da auch ausgefällte SAP-Partikel eine hohe Affinität zum Anionentauscherharz haben und zu Verklebungen führen.

Zur weiteren Verdeutlichung des erfindungsgemäßen Verfahrens und der für die Verwendung wesentlichen Eigenschaften dient das folgende Beispiel:

### Beispiel

Einer 12 Masse-%igen Celluloselösung in N-Methylmorpholin-N-Oxid-Monohydrat wurde ein pulverförmiger Superabsorber auf der Basis eines vernetzten Copolymerisates aus Acrylsäure und Natriumacrylat mit einer Korngröße ≤ 10 µm in einem Gewichtsanteil von 15 Masse-%, bezogen auf einen Celluloseanteil, zugesetzt. Diese Spinnlösung wurde in einem Kneter homogenisiert und bei einer Temperatur von ca. 90°C durch eine spinndüse mit 480 Löchern und einem Düsenlochdurchmesser von 80 µm gesponnen. Die Abzugsgeschwindigkeit lag bei 30 m/min. Der multifile Faden wurde zur Auswaschung des N-Methylmorpholin-N-Oxides durch mehrere Waschbäder geführt. Diese Waschbäder enthielten unterschiedliche Konzentrationen an N-Methylmorpholin-N-Oxid. Die Konzentration war am Ende der Waschstrecke am niedrigsten und im Bereich der Faserbildung an der Spinnstelle am höchsten. Die Waschwasser wurden deshalb entgegen der Laufrichtung des Produkts geführt und der Gehalt an N-Methylmorpholin-N-Oxid erhöhte sich dabei bis auf eine Konzentration zwischen 10 und 20 % im Bereich der Spinnstelle und dient als Spinnbad. Während der Faserbildung und der Wasch- und Transportschritte der beladenen Faser kam es zu Auswaschung und Abrasion von SAP-Teilchen.

Das verbrauchte Spinnbad wurde zur Rückgewinnung des Lösungsmittels N-Methylmorpholin-N-Oxid aus dem Prozess ausgetragen und in einem 150 I Kessel gesammelt. Bei 24 °C werden 120 g Calciumchlorid in gelöster Form zugegeben. Nach Homogenisierung und Fällung wurde das Spinnbad über eine Zentrifuge mit 20.000 min-1 geführt.

Mit diesem Prozess konnte der SAP-Anteil vollständig abgetrennt werden. Das Spinnbad konnte anschließend in bekannter Weise aufbereitet und das Lösungsmittel zurückgewonnen werden.

## Patentansprüche

1. Verfahren zur Abtrennung von Superabsorberpartikeln aus aminoxidhaltigen Spinnbädern, **dadurch gekennzeichnet, dass** durch die Zugabe von bi- und polyvalenten Kationen in einer Konzentration von 1 bis 25.000 mg/l in das der Wiederaufbereitung zugeführte Spinnbad die Superabsorberpartikel, die in Form von Hydrogelen aus vernetzten Superabsorbern vorliegen, gefällt und vom Spinnbad abgetrennt werden.

2. Verfahren nach Anspruch 1, **dadurch gekennzeichnet, dass** als mechanisches Abtrennungsverfahren eine Filtration verwendet wird.

3. Verfahren nach Anspruch 1, **dadurch gekennzeichnet, dass** für das mechanische Abtrennungsverfahren eine Zentrifuge verwendet wird.

4. Verfahren nach Anspruch 1, **dadurch gekennzeichnet, dass** als Superabsorberpartikel Polymere oder Copolymere aus Polyacrylsäuren, Polymethacrylsäuren oder Polyacrylmethacrylaten verwendet werden.

5. Verfahren nach Anspruch 1, **dadurch gekennzeichnet, dass** es sich bei den aminoxidhaltigen Spinnbädern um Lösungen von N-Methylmorpholin-N-oxid in Wasser handelt, die neben den Superabsorberpartikeln weitere Verunreinigungen in Form von Abbauprodukten des Lösungsmittels und andere Zusatzstoffe enthalten, wie Methylmorpholin, Morpholin oder Chromophore.

6. Verfahren nach Anspruch 1, **dadurch gekennzeichnet, dass** es sich bei den bi- und polyvalenten Metallkationen um Salze von Magnesium, Calcium, Aluminium und Zink handelt.

7. Verfahren nach Anspruch 1, **dadurch gekennzeichnet, dass** es sich bei den polyvalenten Kationen um organische An-ionenaustauscherharze handelt.

## Claims

1. Method for the elimination of superabsorber particles from amine oxide-containing spinning baths, **characterized in that** the superabsorber particles, which are present in the form of hydrogels of cross-linked superabsorbers, are precipitated and separated from the spinning bath by the addition of bi- and polyvalent cations in a concentration of from 1 to 25 000 mg/l into the spinning bath which is introduced to the reprocessing treatment.

2. Method according to claim 1 **characterized in that** a filtration is used as mechanical separation method.

3. Method according to claim 1 **characterized in that** a centrifuge is used for the mechanical separation method.

4. Method according to claim 1 **characterized in that** polymers or copolymers of polyacrylic acids, polymethacrylic acids or polyacrylmethacrylates are used as superabsorber particles.

5. Method according to claim 1 **characterized in that** the amine oxide-containing spinning baths are solutions of N-methylmorpholine-N-oxide in water which contain further contaminations in form of degradation products of the solvent and other additives, like methylmorpholine, morpholine or chromophores besides the superabsorber particles.

6. Method according to claim 1 **characterized in that** the bi- and polyvalent metal cations are salts of magnesium, calcium, aluminum and zinc.

7. Method according to claim 1 **characterized in that** the polyvalent cations are organic anionic exchanger resins.

## Revendications

1. Procédé de séparation de particules de superabsorbant à partir de bains acides contenant des oxydes aminés, **caractérisé en ce que**, par l'addition de cations bi- et polyvalents dans une concentration de 1 à 25.000 mg/l dans le bain acide amené en vue de sa revalorisation, les particules de superabsorbant qui sont présentes sous la forme d'hydrogels à partir de superabsorbants réticulés sont précipitées et séparées du bain acide.

2. Procédé selon la revendication 1, **caractérisé en ce qu'**une filtration est utilisée comme procédé de séparation mécanique.

3. Procédé selon la revendication 1, **caractérisé en ce qu'**une centrifugeuse est utilisée pour le procédé de séparation mécanique.

4. Procédé selon la revendication 1, **caractérisé en ce que** des polymères ou copolymères d'acides polyacryliques, polyméthacryliques ou de méthacrylates polyacryliques sont utilisés comme particules de superabsorbant.

5. Procédé selon la revendication 1, **caractérisé en ce que** les bains acides contenant des oxydes aminés sont des solutions de N-oxyde de N-méthylmorpholine dans l'eau qui contiennent, outre les particules de superabsorbant, d'autres contaminations sous la forme de produits de dégradation du solvant et d'autres additifs, comme la méthylmorpholine, la morpholine ou le chromophore.

6. Procédé selon la revendication 1, **caractérisé en ce que** les cations métalliques bivalents et polyvalents sont des sels de magnésium, de calcium, d'aluminium et de zinc.

7. Procédé selon la revendication 1, **caractérisé en ce que** les cations polyvalents sont des résines échangeuses d'anions.
